# EUROPÄISCHE PATENTSCHRIFT

(11) **EP 1 094 153 B1**
(45) Veröffentlichungstag und Bekanntmachung des Hinweises auf die Patenterteilung: **17.05.2006**
(21) Anmeldenummer: 00114616.6
(22) Anmeldetag: 07.07.2000
(51) Int. Cl.: D21G 1/02

(54) **Temperierbare Walze, insbesondere beheizbare Kalanderwalze**
Temperature-controllable roller, especially heated calender roller
Rouleau thermo-réglable, notamment rouleau chauffé pour calandre

(30) Priorität: 19.10.1999 DE 29918267 U
(43) Veröffentlichungstag der Anmeldung: 25.04.2001
(73) Patentinhaber: Walzen Irle GmbH, D-57250 Netphen (DE)
(72) Erfinder: Hellenthal, Ludwig, 57399 Kirchhundem (DE)
(74) Vertreter: Grosse, Wolf-Dietrich Rüdiger

(56) Entgegenhaltungen:
- EP-A- 0 440 140
- DE-A- 4 036 121
- US-A- 5 549 154

## Beschreibung

Die Erfindung betrifft eine temperierbare Walze, insbesondere eine beheizbare Kalanderwalze mit einem hohlzylindrischen, beidseitig mit Flanschzapfen ausgestatteten Walzenkörper, der unterhalb seines Mantels mit peripheren, vorzugsweise achsparallelen, Heizbohrungen versehen ist, die von einem über Bohrungen der Walzenzapfen zu- und abgeführten thermischen Übertragungsmedium durchströmt sind, und bei denen durch Einbauten und/oder gegebenenfalls auch durch die Strömungsgeschwindigkeit entlang deren Länge erhöhende, spontane oder ausgeglichene Querschnittsänderungen, die Strömungsgeschwindigkeit und damit der Wärmeübergang willkürlich beeinflußbar sind.

Bei der Konstruktion durch flüssige oder gasförmige thermische Übertragungsmedien beheizbarer Walzen, insbesondere Kalanderwalzen, war es schon früh bekannt, das Heizmedium vermittels in der Walze angeordneter Verdrängungskörper über den zwischen dem Innenmantel der Hohlwalze und dem Außenmantel des Verdrängerkörpers gebildeten Spalt zu führen, und es wurden bei sehr engem Spalt durch eingearbeitete Nute Fließwege geschaffen. Im Bestreben, die übertragenen Wärmemengen nur über geringe Strecken des Werkstoffes des hohlen Walzenkörpers zu übertragen, wurden auch schon unter dem äußeren Mantel des Walzenkörpers meist achsparallele Bohrungen zur Übernahme der Strömung des thermischen Übertragungsmediums geschaffen. Der zum Außenmantel gerichtete und die ihn umschlingenden Materialbahnen aufzuheizende Wärmestrom hatte im Material des Walzenkörpers geringere Wege als bisher zurückzulegen und war durch keine großen Wärmewiderstände mehr gedrosselt.

Im Laufe der weiteren Entwicklung wurden größere Kalanderwalzen für höhere Verarbeitungsgeschwindigkeiten, bspw. Durchlaufgeschwindigkeiten von Papierbahnen, gefordert, die bei gesteigerter Arbeitsbreite auch höhere Arbeitstemperaturen erlauben sollten, und die der Sicherung der erzielten Qualitäten wegen einen exakten Rundlauf gestatten sollten. Gleichzeitig wurde aber auch sowohl ein exaktes Temperaturfeld verlangt sowie thermische Dehnungen, die den Rundlauf stören könnten, unbedingt vermieden werden.

Man hat daher bspw. in der DE 38 19 391 A1 empfohlen, unterhalb des Außenmantels einer Kalanderwalze gebildete Leitkanäle entlang ihrer Länge einen sich ändernden Querschnitt aufweisen zu lassen, um den Wärmeübergang sowohl bei Dampf- als auch bei Flüssigkeitsheizung zu beeinflussen. Bei der Flüssigkeitsheizung besteht die Auffassung, daß mit Änderung des Strömungsquerschnitts auch die Strömungsgeschwindigkeit sich ändert und bei durch Wärmeentnahme bereits gesunkener Temperatur des thermischen Übertragungsmittels relativ größere Wärmemengen von den Wandungen von Leitnuten oder Leitbohrungen der Kalanderwalze aufgenommen werden, da der Wärmeübergang vom Übertragungsmedium über die Wand mit steigender Strömungsgeschwindigkeit zunimmt.

In der DE 40 36 121 C2 wird für in an sich bekannter Weise peripherer Bohrungen aufweisende Heizwalzen empfohlen, zumindest jeweils zwei periphere Bohrungen seriell zu verbinden und je nacheinander von dem thermischen Übertragungsmedium durchströmen zu lassen, wobei diese beiden, seriell durchströmten peripheren Bohrungen unterschiedliche Querschnitte aufweisen, die sich von der Zu- zu der Abführung hin verringern. Diese Verringerung des Querschnitts kann aber auch dadurch bewirkt werden, daß zwei der Bohrungen zur Erhöhung ihres Querschnittes einander parallelgeschaltet sind und diese parallel geschalteten Bohrungen in Richtung Auslauf mit nur einer Bohrung in Serie geschaltet sind.

Die US 5 549 154 A offenbart zwar entsprechende Walzen mit peripheren Bohrungen, die parallel geschaltet sind, hier sind jedoch zur Vergleichmäßigung der Temperatur über die Breite der Walze in die peripheren Bohrungen Isolierschichten aufgebracht, die in Flußrichtung des Übertragungsmediums dünner werden, so daß sich eine Querschnittserweiterung in Flußrichtung ergibt. Hinzu kommt, dass die Zufuhr des thermischen Übertragungsmediums über ein zentrales Rohr erfolgt, welches lediglich an seinen beiden Enden gehalten wird.

Die EP 0 440 140 A offenbart temperierbare Walzen mit peripheren Bohrungen, bei denen zusätzlich im Walzenkörper Leitbohrungen vorgesehen sind.

Inzwischen sind die von Kalanderwalzen verlangten Leistungen noch weiter gestiegen; immer sensibler reagierende Prozesse bei der Herstellung von Bahnen, im besonderen bei der Papierherstellung, erfordern eine Rundheit der Heizwalzen in immer engeren Toleranzen bei gleichzeitig gesteigerten Wärmeübertragungsleistungen, bei welchen die Grundform der Walze durch von Null abweichende Temperaturgradienten durch thermische Dehnung gestört werden kann, sowie bei höheren Papiergeschwindigkeiten sowie höheren Walzenoberflächentemperaturen. Besonders in Verbindung mit kunststoffbeschichteten Gegenwalzen, die mit der Heizwalze einen NIP bilden, reagieren solch hochzubeschleunigende und schnelllaufende Systeme sehr sensibel auf radiale Formabweichungen. Diese Formabweichungen, auch Polygone genannt, beruhen oft auf einer radialen Ausdehnung von nur wenigen m und regen das System zu Schwingungen an, die als BARRINGS sowohl auf der Heizwalze als auch auf der Gegenwalze sowie dem Walzprodukt sichtbar werden. Diese Formabweichungen entstehen durch die radial und über den Umfang ungleichmäßige Wärmeeinbringung in den Walzenmantel über die Peripherbohrungen: Nach der Optimierung der Durchmesser dieser Peripherbohrungen, ihrer Abstände zueinander und zur Walzenoberfläche bleibt ein Temperaturfeld-Restfehler, der sich am Walzenmantel als BARRINGS fördemde Abweichung von der vorgegebenen Zylinderfläche zeigt. Bei den gegenwärtig genutzten Kalanderwalzen mit weitgehend unterbundenen thermischen Abweichungen wird das Gegenstromprinzip benutzt, bei dem mindestens zwei periphere Bohrungen in Serie geschaltet sind und nacheinander vom thermischen Übertragungsmedium durchflossen werden, wobei durch Einbau von Verdrängerkörpem in die peripheren Bohrungen die Abweichungen reduziert werden sollen. Eine völlige Vermeidung der Abweichungen jedoch hat sich bei diesem Beheizungsprinzip nicht erzielen lassen.

Die Erfindung geht daher von der Aufgabe aus, die verbliebenen Rundlauffehler von Thermowalzen zu vermeiden bzw. drastisch zu verringern.

Gelöst wird diese Aufgabe mit den im Patentanspruch 1 genannten Maßnahmen. Der empfohlene Parallelbetrieb aller peripheren Bohrungen sichert die rotationssymmetrische thermische Gleichheit aller Querschnitte durch den Arbeitsbereich der Kalanderwalze, während die einzelnen Einbauten, gegebenenfalls auch die Neigung der peripheren Bohrungen gegen die Walzenachse, den thermischen Gradienten in axialer Richtung verschwinden lassen.

Zweckmäßige, vorteilhafte und erfinderische Weiterbildungen des Gegenstandes des Hauptanspruchs sind in den Unteransprüchen gekennzeichnet.

Im einzelnen sind die Merkmale der Erfindung anhand der Beschreibung eines Ausführungsbeispieles in Verbindung mit dieses darstellenden Zeichnungen erläutert. Es zeigen hierbei:
- Figur 1: einen in axialer Richtung geführten Halbschnitt einer Kalanderwalze,
- Figur 2: ein Diagramm zur Erläuterung der Abhängigkeit von an der Walze auftretenden Temperaturen in Abhängigkeit von der Beheizung, und

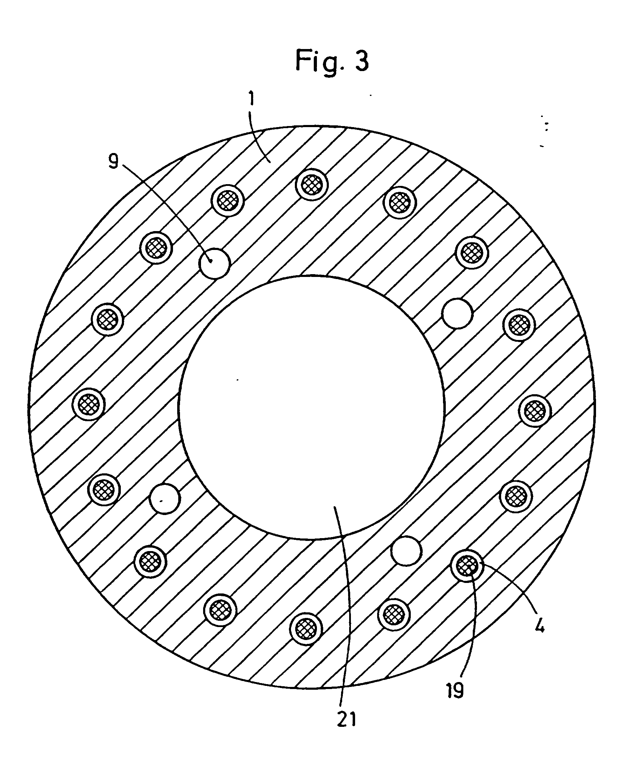

- Figur 3: einen Walzenquerschnitt im mittleren Bereich der Kalanderwalze nach Fig. 1.

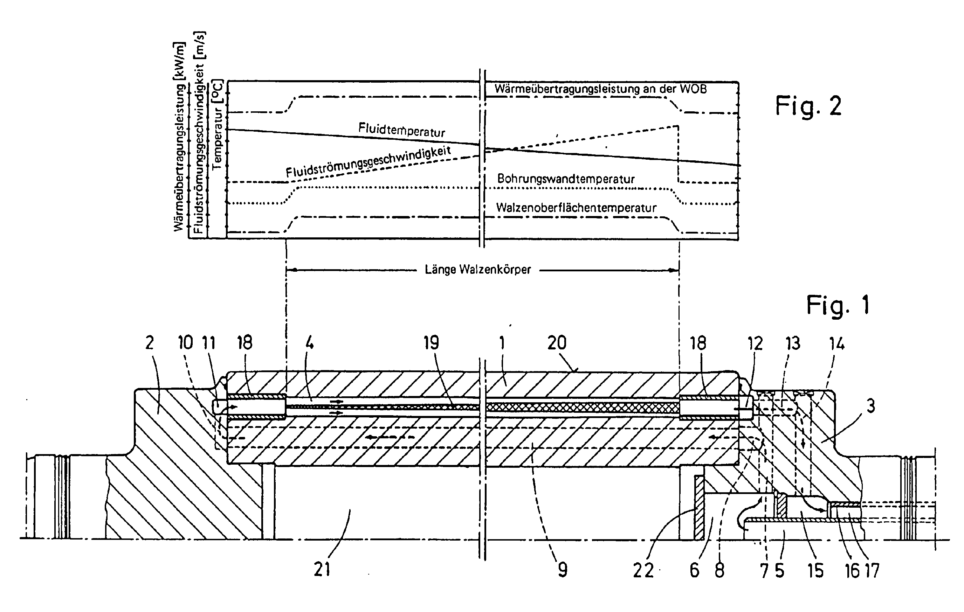

In der Figur 1 ist im axialen Halbschnitt eine Kalanderwalze als Ausführungsbeispiel der Erfindung dargestellt. Mit dem Hohlzylinder im Walzenkörper 1 sind beidseitig Walzenzapfen 2 und 3 verbunden, welche in die nicht dargestellten, die Walze tragenden Lager eingreifen. Zur Aufheizung der Kalanderwalze sind im Walzenkörper 1 periphere Bohrungen 4 vorgesehen, die mit dem thermischen Übertragungsmedium gespeist werden. Der Zufluß sowie der Abfluß dieses Übertragungsmediums erfolgt über ebenfalls nicht dargestellte Rotationskupplungen, die auf dem dem Walzenantrieb dienenden Walzenzapfen 2 gegenüberliegenden Walzenzapfen 3 angeordnet, jedoch in der Figur nicht mehr dargestellt sind. Der Zufluß erfolgt über ein zentrales Einströmrohr 5 in einen Verteilerraum 6, von dem aus Zuführungsbohrungen 7 radial bis zu den vor die Mündungen von in den Walzenkörper 1 vorzugsweise achsparallel durchquerenden Leitbohrungen 9 endenden Speisebohrungen 8 führt. Im gegenüberliegenden Walzenzapfen 2 sind für die Leitbohrungen 9 jeweils von diese radial ausgehende Speisenute 10 angeordnet, die zu einem durchgehenden Ringkanal 11 führen. Im wesentlichen gleichen radialen Abstand des Ringkanales von der Walzenachse sind die peripheren Bohrungen 4 angeordnet, innerhalb deren das thermische Übertragungsmedium unter Abgabe von Heizleistung über einen Ringkanal 12 des Walzenzapfens 3 sowie durch periphere und radiale Abzugsbohrungen 13 und 14 sowie einen Sammelraum 15 über den zwischen dem Eintrittsrohr 5 sowie einem Außenrohr 16 gebildeten Zwischenraum 17 und über die Rotationskupplungen zurückfließt.

Die peripheren Bohrungen 4 sind zur Behebung des Oxhowd-Effektes beidseitig mit thermisch isolierenden Muffen 18 ausgestattet. Zur Einstellung eines über die Länge der peripheren Bohrungen 4 konstanten Wärmeüberganges bzw. konstanter Wandtemperaturen sind die peripheren Bohrungen 4 jeweils zusätzlich mit einem Verdrängerkörper 19 ausgestattet, der mit einer die Strömung schneidenden Spitze an der in der Zeichnung linken, der Einströmungsseite, der peripheren Bohrungen angeordnet ist, und der sich mit der Strömung des thermischen Übertragungsmediums zur gegenüberliegenden, der Ausströmungsseite hin, in seinem Querschnitt vergrößert. Im vorliegenden Falle ist diese Vergrößerung des Durchmessers linear mit der Länge der Walze dargestellt. Es sind aber auch andere Formen möglich, die eine lineare Steigerung des Querschnittes vergeben oder aber empirisch so gestaltet sind, daß sich eine konstante Wandtemperatur auch bei ungleichförmiger Wärmeabnahme über die Länge des Mantels ergibt.

In jedem Fall wird hierdurch erreicht, daß in Umfangsrichtung hintereinander nur gleichartig beaufschlagte periphere Bohrungen 4 vorliegen, von denen alle in Umfangsrichtung hintereinander liegenden durch ihre parallele Anordnung zwischen den Ringkanälen 11 und 12 parallel und damit identisch betrieben werden. Bei ausreichender Stärke des über den Bohrungen 4 anstehenden Mantels 20 des Walzenkörpers 1 ist damit die Neigung zu poligonartigen Verformungen und Bildung von Barrings weitest möglich unterbunden.

Aber auch der thermische Abfall in axialer Richtung ist weitgehend unterbunden, da die Verdrängerkörper 19 und die durch diese erwirkte Beeinflussung sowohl der Strömungsgeschwindigkeit als damit auch des Wärmeüberganges minimieren in axialer Richtung auftretende thermische Gradienten und damit unliebsame Verformungen.

Die rotationssymetrische Identität und damit in Umfangsrichtung störende thermische Gradienten werden vermieden, indem die peripheren Bohrungen 4 alle gemeinsam zwischen den Ringnuten 11 und 12 parallel angeordnet sind und ihre Wandungstemperatur durch Verdrängerkörper 19 auf gleicher Temperatur gehalten werden. Die tiefer gelegenen Leitbohrungen 9 sind vom Mantel des Walzenkörpers 1 derart entfernt, daß sie keinen störenden Einfluß ausüben. Im übrigen kann der Durchflußweg, der zur Zuführung und Abführung des thermischen Übertragungsmediums erforderlich ist, wenn Zu- und Abführung desselben über den gleichen Walzenzapfen vorgenommen werden soll, beliebig gestaltet werden.

Die Abschottung des Innenraumes 21 des Walzenkörpers 1 durch Scheibe 22 gestattet, die Walze durch Ausbohren der zentralen Regionen leichter zu gestalten, ohne daß dieser Effekt durch Aufnahme von Übertragungsmittel teilweise aufgehoben wird.

## Patentansprüche

1. Temperierbare Walze, insbesondere beheizbare Kalanderwalze, mit einem hohlzylindrischen, beidseitig mit Walzenzapfen (2, 3) ausgestatteten Walzenkörper (1), der unterhalb seines Mantels (20) mit peripheren, vorzugsweise achsparallelen, Bohrungen (4) versehen ist, die von einem über den gleichen Walzenzapfen (3) zu- und abgeführten thermischen Übertragungsmedium durchströmt sind, und bei denen durch Einbauten (19) und/oder gegebenenfalls auch durch die Strömungsgeschwindigkeit entlang deren Länge erhöhende spontane und/oder ausgeglichene Querschnittsänderungen die Strömungsgeschwindigkeit und damit der Wärmeübergang willkürlich beeinflußbar sind, wobei alle peripheren Bohrungen (4) einander parallel geschaltet sind, und sich der Querschnitt aller Bohrungen (4) in Durchflußrichtung des thermischen Übertragungsmediums im Sinne gleicher Wärmeübertragung bzw. über die Länge der Bohrung konstanter Temperatur ihrer Wandungen verringert, und wobei das thermische Übertragungsmedium den peripheren Bohrungen (4) über den Walzenkörper (1) vorzugsweise achsparallel durchdringende, gegenüber den peripheren Bohrungen (4) tiefer liegende Leitbohrungen (9) zugeleitet wird.

2. Temperierbare Walze nach Anspruch 1
**dadurch gekennzeichnet,**
**daß** periphere Bohrungen (4) gegen die Walzenachse geneigt verlaufen und damit ihre Achsen auf einer gemeinsamen Kegelmantelfläche angeordnet sind.

3. Temperierbare Walze nach Anspruch 1 oder 2,
**dadurch gekennzeichnet,**
**daß** die Anzahl der Leitbohrungen (9) die der peripheren Bohrungen (4) unterschreitet.

4. Temperierbare Walze nach Anspruch 3,
**dadurch gekennzeichnet,**
**daß** der Durchmesser der Leitbohrungen (9) den der peripheren Bohrungen (4) übersteigt.

## Claims

1. A tempering roller, particularly a heatable calender roller, with a hollow-cylindrical roller body (1) that is equipped with roller necks (2, 3) on both sides and provided with peripheral, preferably axially parallel bores (4) underneath its sleeve (20), wherein a thermal transfer medium that is supplied and discharged via the same roller neck (3) flows through the aforementioned bores, wherein the flow speed and therefore the thermal transfer can be arbitrarily influenced with installations (19) and/or, if applicable, spontaneous and/or smooth changes in cross section that increase the flow speed along their length, wherein all peripheral bores (4) are connected to one another in parallel and the cross section of all bores (4) becomes smaller in the flow-through direction of the thermal transfer medium in the sense of a homogenous thermal transfer and a constant temperature of the bore walls over the length of the bores, and wherein the thermal transfer medium is supplied to the peripheral bores (4) via guide bores (9) that preferably penetrate the roller body (1) in an axially parallel fashion and lie deeper than the peripheral bores (4).

2. The tempering roller according to Claim 1,
**characterized in**
**that** peripheral bores (4) extend at an incline referred to the roller axis and their axes therefore are arranged on a common envelope of a cone.

3. The tempering roller according to Claim 1 or 2,
**characterized in**
**that** the number of guide bores (9) is smaller than the number of peripheral bores (4).

4. The tempering roller according to Claim 3,
**characterized in**
**that** the diameter of the guide bores (9) is larger than the diameter of the peripheral bores (4).

## Revendications

1. Rouleau à température modulable, notamment rouleau de calandre pouvant être chauffé, comprenant un corps de rouleau (1) cylindrique creux équipé des deux côtés de tourillons de rouleau (2, 3), qui est pourvu en dessous de sa chemise (20) d'alésages périphériques (4), de préférence parallèles en axe, à travers lesquels passe un fluide de transmission thermique amené et évacué par le même tourillon de rouleau (3) et dans lesquels la vitesse d'écoulement et donc la transition thermique peuvent être influencées arbitrairement par des éléments encastrés (19) et/ou le cas échéant aussi par des modifications de section transversale spontanées et/ou équilibrées augmentant la vitesse d'écoulement le long de leur longueur, tandis que tous les alésages périphériques (4) sont pratiqués parallèlement les uns aux autres et que la section transversale de tous les alésages (4) diminue dans le sens de passage du fluide de transmission thermique dans l'optique d'une même transmission de chaleur ou d'une température constante de leurs parois sur la longueur de l'alésage et tandis que le fluide de transmission thermique est conduit vers les alésages périphériques (4) par des alésages conducteurs (9) percés de préférence parallèlement en axe et placés plus bas que les alésages périphériques (4).

2. Rouleau à température modulable selon la revendication 1,
**caractérisé en ce que**
les alésages périphériques (4) s'étendent avec une inclinaison vers l'axe du rouleau et qu'ainsi leurs axes sont disposés sur une surface de chemise conique commune.

3. Rouleau à température modulable selon la revendication 1 ou 2,
**caractérisé en ce que**
le nombre d'alésages conducteurs (9) n'atteint pas celui des alésages périphériques (4).

4. Rouleau à température modulable selon la revendication 3,
**caractérisé en ce que**
le diamètre des alésages conducteurs (9) dépasse celui des alésages périphériques (4).
